# EUROPEAN PATENT APPLICATION

(11) **EP 0 940 615 A1**
(43) Date of publication of application: **08.09.1999**
(21) Application number: 99200625.4
(22) Date of filing: 04.03.1999
(51) Int. Cl.: F16L 5/02, F16L 5/10

(54) **Device and method for sealing a passage**

(30) Priority: 04.03.1998 NL 1008480
(71) Applicant: Filoform B.V., NL-3525 BB Utrecht (NL)
(72) Inventor: Ipenburg, Wim, 3438 VG Nieuwegein (NL)
(74) Representative: Ottevangers, Sietse Ulbe

(57) **Abstract**

A device (1) for sealing a passage (2), in particular a passage for pipes and the like, comprising a first part (4) and a second part (5) connected therewith via a sleeve-shaped body, the passage of at least part of said sleeve-shaped body being at least reducible by displacement, in particular rotation of the first part relative to the second part, such that the sleeve-shaped body can be sealed against itself and/or against an element passed through the passage.

## Description

The invention relates to a device for sealing a passage, in particular a passage for pipes and the like. Such a device is, for instance, known from Netherlands Patent Application 1004668.

This known device comprises a tubular plug having an outer surface arranged for sealing abutment against an inner side of a passage, a bore extending in the longitudinal direction of the plug. This bore has a part tapering towards the end of the plug. Depending on the thickness of the pipe to be passed through, a part of the plug can be cut off, so as to obtain a passage with an end having a cross-section which is slightly smaller than the cross-section of the pipe to be passed through. When the pipe is passed through the passage, the material of the plug slightly deforms and provides a clamping seal. Such a pass-through plug can therefore be relatively easily made to size for different pipe thicknesses. A drawback of this known device is, however, that this plug has to be made to size for use and can therefore only be used once in principle. Moreover, such a device does not provide the possibility of passing through pipes other than approximately round ones. Furthermore, this known plug has the drawback that correction is only possible to a limited extent, so that relatively many rejects will occur.

It is an object of the invention to provide a device of this known type in which the above drawbacks are avoided, while retaining the advantages thereof. To this end, a device according to the invention is characterized by the features of claim 1.

A device according to the invention has the advantage that the passage of the sleeve-shaped body can be reduced to any desired size, so that a good seal can always be obtained against an element extending through the passage, at least through the sleeve-shaped body, such as, for instance, a pipe or the like. Also when no pipe extends through the passage, at least through the sleeve-shaped body, a good seal of the passage can be obtained. By displacing the first part relative to the second part, the desired diameter and thus the desired seal can always be obtained, which seal can be effected both against elements having a circular cross-section and against elements having a cross-section of a slightly different shape. Such a device can relatively easily be placed in a passage and be closed, for instance against the above pipe. Moreover, the sleeve-shaped body can relatively easily take up roughnesses. A device according to the invention is therefore an all-purpose device and provides a large degree of adaptability to different types and sizes of elements to be passed through, while, moreover, it is relatively easy and inexpensive to manufacture and use such a device. Moreover, such a device is adjustable, preferably several times.

In an advantageous embodiment a device according to the invention is characterized by the features of claim 3.

The manufacture of the sleeve-shaped body from relatively flexible foil has the advantage that changes in shape and size can be followed even more easily, while, moreover, a still better connecting stress of the sleeve-shaped body is obtained against itself and/or against an element passed through the passage, such as a pipe. In particular the use of elastomeric plastic or rubber for the manufacture of such a sleeve-shaped body has these advantages. However, such a sleeve-shaped body may also be manufactured, for instance wound, from other foil, which foil may further be provided with a relatively elastic layer, to achieve the objects mentioned before.

In a further elaboration a device according to the invention is characterized by the features of claim 5.

Securing of the first part relative to the second part has the advantage that the device can be easily held in a completely or partly closing position. A good seal is thereby obtained in a simple manner for a relatively long time.

In a preferred embodiment a device according to the invention is characterized by the features of claim 6.

Means for securing the device in a passage have the advantage that the device can relatively easily be placed in a passage, while no further auxiliary means are required to fix the device therein. In particular not when these means are designed as means for clamping the device in the passage.

In a further advantageous embodiment a device according to the invention is characterized by the features of claim 7.

Coating of at least part of the inner side of the sleeve-shaped body with a sticky and/or highly viscous, in particular flexible mass has the advantage that any folds or the like occurring in a deformed sleeve-shaped body can be easily closed by pressing, while in particular when the mass is sticky, the sealing effect of the device can be retained even better.

The invention further relates to a method for at least partly sealing a passage, characterized by the measures of claim 8.

With such a method a good permanent seal of a passage is obtained in a very simple manner, through which passage a pipe or another element may or may not extend. The passage can be sealingly adjusted with the sleeve-shaped body to elements of different shapes and dimensions of cross-section. In particular when the sleeve-shaped body is manufactured from an at least slightly flexible material, the device can additionally be used when the element is to be alternately passed through and removed from the passage, without the sealing effect of the device being lost. Thus, for instance, measuring devices and the like may be periodically passed through the passage.

Further advantageous embodiments of a device and a method according to the present invention are given in the subclaims.

In order to elucidate the invention, a number of practical examples will be described and explained with reference to the accompanying drawings in which:
Fig. 1 is a diagrammatic sectional side view of a pass-through device according to the invention in a passage, in the open position;
Fig. 2 is a diagrammatic view of a device of Fig. 1 with a pipe passed therethrough, in the closed position;
Fig. 2A is a diagrammatic front view of a device of Fig. 2;
Fig. 3 is a diagrammatic sectional side view of a first preferred embodiment of a device according to the present invention, in the open position;
Fig. 4 is a diagrammatic sectional side view of an alternative embodiment of a device according to the invention; and
Fig. 5 is a diagrammatic view of a device according to the invention in the closed position, with two pipes having different cross-sections being partly passed through.

In this description similar or comparable parts have corresponding reference numerals.

In this description a number of practical examples will be described on the basis of pipes to be passed through, but it will be clear that a device according to the invention can also be used to seal different passages, for instance the neck of a container, openings through which objects or parts of the body are to be temporarily passed into or out of a space, and the like. These embodiments will immediately be clear to a skilled person from the description.

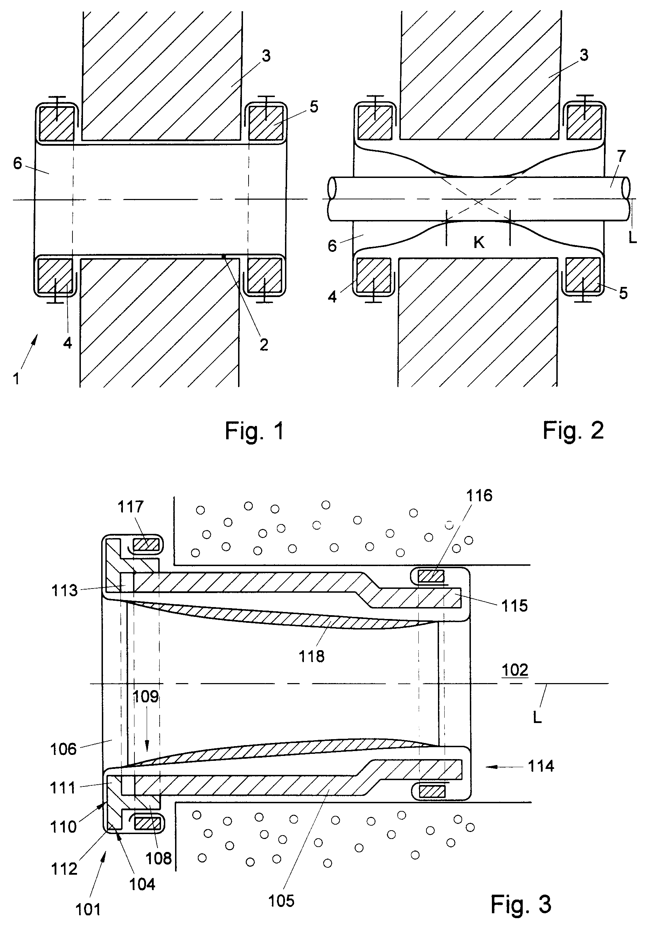

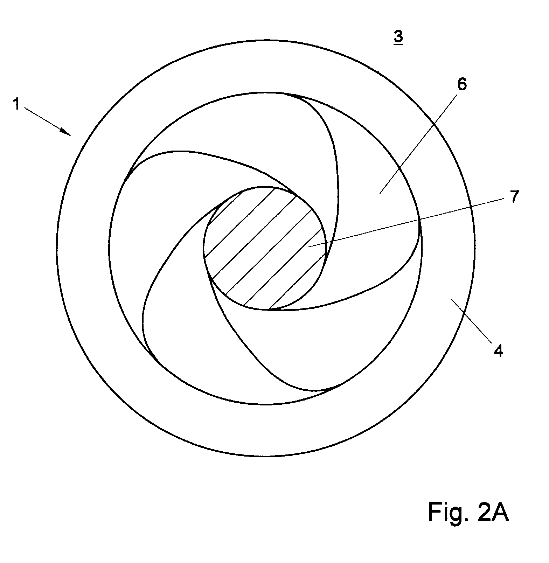

Fig. 1 is a diagrammatic sectional side view of a device 1 according to the invention, received in a passage 2 in a wall 3. The device 1 comprises a first annular part 4, which, during use, extends on a first side of the passage 2, and a second annular part 5, which extends on the other side of the passage. The first annular part 4 and the second annular part 5 are connected together by a sleeve-shaped body 6, which, in the embodiment shown, is designed as a relatively flexible plastic or rubber hose, such as, for instance, a piece of inner tube. To fix the sleeve-shaped body, each end thereof is laid over the first annular part 4 and the annular part second 5, respectively, and secured thereto, for instance by gluing, clamping, shrinking or, as diagrammatically shown in Figs. 1 and 2, by means of nails or the like. In the embodiment shown, at least one of the two annular parts 4, 5 is preferably slightly elastic, so that it can be passed through the passage 2. The sleeve-shaped body 6 is preferably so elastic and has such a length that in the condition shown in Figs. 1 and 2 the two annular parts 4, 5 are pulled against and thereby sealingly abut on the two sides of the wall 3.

As shown in Fig. 2, a pipe 7 may be passed through the sleeve-shaped body in the longitudinal direction, after which the first annular part 4 is gripped and rotated about the longitudinal axis L relative to the second annular part, such that the sleeve-shaped body is twisted. Between the two annular parts 4, 5 the sleeve-shaped body is thereby forced over a length K against the pipe 7 and effects a seal against it, such that the passage 2, in particular the device 1, is sealed against the passage of gas and liquid, while the pipe 7 is passed through. As a result of the deformability of the sleeve-shaped body and the optional elasticity thereof, all kinds of different shapes and dimensions of pipes 7 can be passed through with a device 1 while the space remaining open can be closed by means of the sleeve-shaped body 6. In this connection it is preferable that the two annular parts are secured against the wall 3 and/or the sleeve-shaped body 6 is connected with the pipe, for instance by gluing the sleeve-shaped body 6 to the pipe and/or to itself. Moreover, other means may be used to secure the two annular parts 4, 5 in the selected position relative to each other and the wall 3, for instance by using friction.

Fig. 2A is a front view showing how the sleeve-shaped body 6 is deformed against the pipe 7. A diaphragm-shaped closure is thereby obtained.

In the embodiment shown, the sleeve-shaped body is made tubular, such that the pipe has to be passed through the sleeve-shaped body or the device has to be slid over the pipe over a free end. It is also possible, however, to provide the two annular parts 4, 5 and the sleeve-shaped body with a longitudinal cut, such that the two annular parts and the sleeve-shaped body can be folded apart so as to be laid over a pipe in the radial direction, after which the annular parts and the sleeve-shaped body can be closed again, optionally by gluing together, and can then be used in the manner described before. This has the advantage that pipes extending through a passage without an available free end can also be easily sealed with a device according to the invention. Besides, a passage sealed with a device 1 according to the invention in a manner described before can be easily released again by rotation of the two annular parts 4, 5 in the opposite direction, while, in a comparable manner, a seal can be obtained without a pipe 7 extending through the passage.

Figs. 1 and 2 show a pass-through device 1 received in a passage in a wall, but it will be clear that such a passage may also be provided in other elements, for instance in sheet-metal work, an open end of a tube and the like.

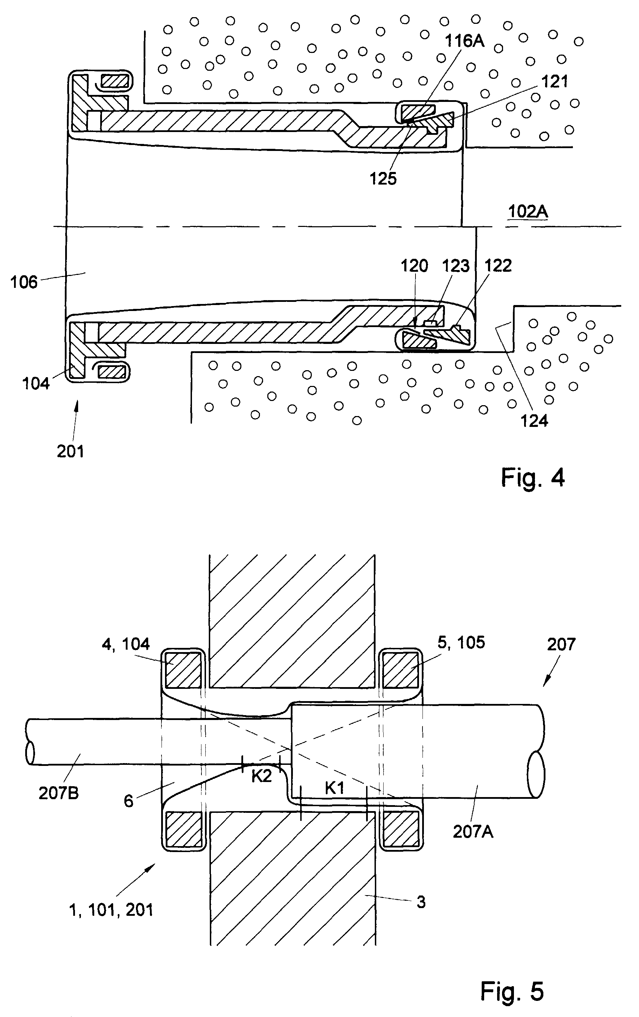

Fig. 3 shows an alternative embodiment of a device 101 received in a passage 102, which passage 102 has a depth exceeding the length of the sleeve-shaped body 106. The passage 102 may be regarded here as the open end of a bore, pipe, blind hole or the like. The device 101 comprises an annular first part 104 and a tubular second part 105. The annular first part 104 comprises a collar 108 abutting against the outer side of a first end 109 of the tubular second part 105 and an annular end flange 110 extending at right angles to the collar 108. The end flange 110 comprises an inner part 111, which, seen in the radial direction, extends inside the collar, and an outer part 112, which, seen in the radial direction, extends outside the collar 108. Between the inner part 111 and the frontal end 109 of the tubular second part 105, teeth 113 are provided between the inner part 111 of the flange 110 and the frontal end 109, which enable rotation of the first part 104 relative to the tubular part 105 about the longitudinal axis L in a first direction but prevent this rotation in the opposite second direction. Thus the first part 104 can be rotated and secured relative to the second part 105 in a preferably relatively large number of discrete steps. Rotation in the opposite direction is only possible by pulling away the first part 104 from the tubular second part 105, such that the teeth 113 are brought out of engagement. If required, this can be prevented by suitable means preventing axial displacement of the first part 104 relative to the second part 105, which means are not shown but will immediately be clear to a skilled person.

Near the second end 114 the second tubular part 105 is slightly reduced, which reduced part 115 has a first clamping ring 116 disposed around it. Disposed around the collar 108 is a second clamping ring 117. Fixed between the first clamping ring 116 and the second clamping ring 117 is the sleeve-shaped body 106, which extends through the inner side of the tubular second part 105 and the first annular part 104, over the end flange 110 and the reduced end 115 of the second tubular part 105. By means of the first clamping ring 116 the sleeve-shaped body is fixed in position to the reduced part 115, while the other end of the sleeve-shaped body is fixed in position against the collar 108 by means of the second clamping ring 117. The length of the sleeve-shaped body 106 and the flexibility thereof are preferably selected such that the first annular part 104 is slightly pre-stressed in the direction of the tubular second part 105, such that the teeth 113 are forced into engagement.

If desired, the sleeve-shaped body can be fixed to the first and/or second part in another manner, for instance as described for the embodiments of Figs. 1 and 2, in which the clamping rings 116, 117 are left out.

A device 101 of Fig. 3 can be used as follows.

The tubular second part 105 with the reduced part 115 in front is slid into a passage 102, preferably with some friction. Subsequently, if desired, a pipe 107 (not shown) may be passed through the sleeve-shaped body in the passage 102, after which the first part 104 can be rotated about the longitudinal axis L relative to the tubular second part 105. Thus the sleeve-shaped body 106 is twisted while effecting the above seal against itself and/or against the pipe 107 passed through. Should the passage have to be released again, then, if the device 101 provides this possibility, the ring 104 can be rotated in the opposite direction, releasing the opening within the sleeve-shaped body. To completely close the sleeve-shaped body, a rotation of less than 360°, for instance between 45° and 180°, is sufficient, depending on, for instance, the cross-section of the pipe against which a seal is effected, which makes the use of a device according to the invention very simple.

In the embodiment shown in Fig. 3, a part of the inner side of the sleeve-shaped body has a highly viscous mass 118 applied thereto, which, with the sleeve-shaped body 106 in twisted condition, can ensure an even better seal against itself and/or against the pipe. If required, a layer of glue 118 or a combination thereof can also be selected, whereby an even better seal is obtained and retained.

Fig. 4 shows an alternative embodiment of an apparatus 201 according to the invention, which roughly corresponds to the embodiment as shown in Fig. 3. As regards the relevant parts of the description, reference is made to the pertinent passages. In the embodiment shown in Fig. 4, the reduced part 115 has an adapted first clamping ring 116A disposed around it, which, at least in the radial direction, is slightly deformable, and of which the surface 120, which, seen in the radial direction, is located inside, is inclined slightly outwards, seen in the axial direction, towards the adjacent end 114 of the second tubular body 105. Furthermore, the reduced part 115 has a third clamping ring 121 disposed around it, which has a surface, which, seen in the radial direction, is located outside, and which surface is inclined inwards, such that the third clamping ring 121 tapers towards the first end 109 of the second tubular part 105. Provided at the inner surface, seen in the radial direction, of the third clamping ring 121 is a click edge, which can cooperate with a circular groove 123 provided in the outer side of the reduced part 115.

Fig. 4, at the bottom side, shows the device 201, during placement thereof in a passage 102A. This passage has a shoulder 124, against which the device 201 can abut with the frontal end, in particular the third clamping ring 121 and the sleeve-shaped body 106 laid over it. The longitudinal edge 125, remote from the shoulder 124, of the tapering third clamping ring 121 is located between the reduced part 115 and the first clamping ring 116A and functions as a wedge. When pushing the device 201 through against the shoulder 124, the third clamping ring 121 is forced further between the reduced part 115 and the first clamping ring 116A, whereby the first clamping ring 116A is deformed outwards, as shown in the upper part of Fig. 4. The click edge 122 will then engage the groove 123, whereby the third clamping ring 121 is fixed in position to the tubular second part 105. The outward deformation of the first clamping ring 116A will ensure a good clamping of the device 101 in the passage 102A. Subsequently, the first annular part 104 can be rotated in the manner described before, during which the second part 105 will remain in position as a result of the above clamping, whereby the desired twisting of the sleeve-shaped body and the intended seal is obtained.

Fig. 5 shows a device 1 of Figs. 1 and 2, with a pipe 207 composed of two parts being passed through the device 1. The pipe 207 comprises a first part 207A having a relatively large cross-section and a second part 207B having a relatively small cross-section. Moreover, the cross-sections are not quite circular but, for instance, oval, polygonal or shaped otherwise. As appears from Fig. 5, twisting of the sleeve-shaped body 6 will provide a seal against the first pipe part 207A over a length K1 and against the second pipe part 207B over a length K2. Thus a good seal can also be obtained with irregularly shaped pipes, while, moreover, as a result of friction between the pipe 207 and the sleeve-shaped body 6, the second pipe part 207B can be prevented from being pulled out of the first pipe part 207A.

The invention is by no means limited to the practical examples shown in the figures. Many variations thereof are possible. Thus, many other means may be used to secure the device in a passage, for instance glue, foam, screw means and the like, for instance outer thread or teeth which can cooperate with a suitably shaped inner surface of the passage. Also, the device may have an outer cross-section other than circular, which, when used for a suitably shaped passage, can likewise prevent rotation of the device relative to the passage. Furthermore, besides or instead of the third clamping ring 121, other expansion means may be used, for instance an expanding foam within the sleeve-shaped body. Moreover, the space between the sleeve-shaped body and the tubular second part may be completely or partly filled with an elastic or non-elastic foam, whereby an even better seal of the passage is obtained. A device according to the invention may be used as a sealing means for pipes in passages but may also be used as a stopper in containers, bottles, holders and the like for, temporarily or otherwise, closing openings provided therein. These and many comparable variations are deemed to fall within the scope of the invention.

## Claims

1. A device for sealing a passage, in particular a passage for pipes and the like, comprising a first part and a second part connected therewith via a sleeve-shaped body, the passage of at least part of said sleeve-shaped body being at least reducible by displacement, in particular rotation of the first part relative to the second part, such that the sleeve-shaped body can be sealed against itself and/or against an element passed through the passage.

2. A device according to claim 1, wherein the sleeve-shaped body is made tubular.

3. A device according to claim 1 or 2, wherein the sleeve-shaped body is made of relatively flexible foil, in particular of an elastomeric plastic or of rubber.

4. A device according to any one of the preceding claims, wherein the first and the second part are substantially tubular or annular, the longitudinal axes of said first and said second part substantially being in line.

5. A device according to any one of the preceding claims, wherein means are provided to secure, in a selected, in particular rotated position, the first part relative to the second part, at least the sleeve-shaped body in a selected sealing position.

6. A device according to any one of the preceding claims, wherein means are provided to secure the device in a passage, in particular by increasing at least part of the cross-section of at least part of the first and/or the second part, such that the device can be secured in the passage by clamping.

7. A device according to any one of the preceding claims, wherein the sleeve-shaped body is provided at least on the inner side over at least part of the surface with a sticky and/or highly viscous mass arranged to at least partly seal and keep sealed, during use, folds and the like in the sleeve-shaped body.

8. A method for at least partly sealing a passage, wherein a sleeve-shaped body is at least partly brought into a passage and is twisted or otherwise deformed, such that over at least part of the length of the sleeve-shaped body the wall of the sleeve-shaped body is pressed against itself and/or against an element extending through the passage, at least through the sleeve-shaped body, thereby at least partly closing the passage of the sleeve-shaped body.

9. A method according to claim 8, wherein the sleeve-shaped body is at least partly received in a housing, said housing being fittingly placed in the passage, while sealing passages, if any, between the housing and the wall of the passage, said passage being at least partly closed by deformation of at least part of the sleeve-shaped body.

10. A method according to claim 8 or 9, wherein at least two elements extending approximately axially in line are passed through, at least into a passage, at least through or into the sleeve-shaped body, said sleeve-shaped body being sealingly deformed against at least part of each of the elements.
